# EUROPEAN PATENT SPECIFICATION

(11) **EP 0 638 056 B1**
(45) Date of publication and mention of the grant of the patent: **09.06.1999**
(21) Application number: 93907069.4
(22) Date of filing: 26.02.1993
(51) Int. Cl.: C07C 7/08, C07F 7/08, C07F 7/18

(54) **HYDROSILYLATION OF FULLERENES**
HYDROSILYLIERUNG VON FULLARENEN
HYDROSILYLATION DE FULLERENES

(43) Date of publication of application: 15.02.1995
(73) Proprietor: WISCONSIN ALUMNI RESEARCH FOUNDATION, Madison, WI 53707-7365 (US)
(72) Inventor: WEST, Robert, C., Madison, WI 53705 (US); OKA, Kunio, Madison, WI 53705 (US)
(74) Representative: Ellis-Jones, Patrick George Armine
(86) International application number: US9301762
(87) International publication number: WO9419300

(56) References cited:
- US-A- 2 823 218
- CHEMICAL ABSTRACTS, vol. 120, no. 18, 2 May 1994 Columbus, Ohio, US; abstract no. 218744, WEST, ROBERT ET AL: "Fullerene C60-siloxane polymers from hydrosilylation reactions" XP002035106 & POLYM. PREPR. (AM. CHEM. SOC., DIV. POLYM. CHEM.) (1993), 34(1), 227 CODEN: ACPPAY;ISSN: 0032-3934, 1993,
- CHEMICAL ABSTRACTS, Volume 116, No. 18, issued 04 May 1992 (Columbus, Ohio, USA), JINNO et al., "Is it Possible to Recognize Organic Molecules by Controlling Silica Gel Surface?", the Abstract No. R186754u, Kagaku(Kyoto), 1991, 46(11), 806-7, Japan.

## Description

This invention relates generally to silicon-substituted fullerene compounds and methods of making them.

### Background Art

Fullerenes are a recently discovered form of pure solid carbon. They are cage-like hollow structures comprised of hexagon and pentagon rings fused together to form ball shaped hollow molecules which resemble geodesic domes. Fullerenes may range from 32 carbons up to many hundreds of carbon atoms. A fullerene molecule containing 60 carbons (C₆₀) is the archetype, and is known as Buckminsterfullerene. For a general discussion of fullerenes, see R. Curl, et al., Scientific American, 54 - 63 (Oct. 1991).

Fullerenes have been synthesized by decomposing graphite rods in the presence of helium. Graphite rod decomposition may be accomplished by electric arc, as discussed in A. Koch, et al., 56 Journal of Organic Chemistry, 4543 - 4545 (1991)(C₆₀; C₇₀), or by plasma discharge as discussed in D. Parker, et al., 113 Journal American Chemical Society, 7499 - 7503 (1991)(C₆₀ - C₂₆₆).

Researchers have identified many interesting uses of fullerenes over the past few years. For example, fullerenes show promise for use in diamond films, non-linear optical and superconducting materials, semi-conductors, and photo-conductors. Because pure fullerenes form discreet crystals, more processable forms of fullerenes are needed to more fully exploit their unique properties.

A few polymers of fullerenes have been synthesized to help meet this need. In this regard, D. Loy, et al. synthesized a C₆₀-*p*-xylyene copolymer. See, 114 Journal American Chemical Society, 3977 - 3978 (1992). Another example is a palladium polymer of a Buckminsterfullerene synthesized by H. Nagashima, et al., Journal of the Chemical Society, "Chemical Communications", 377 - 379 (1992). Other examples are the synthesis by S. Shi, et al. of a polyester and polyurethane of diphenyl C₆₁. (See, 114 Journal American Chemical Society, 10656 - 10657 (1992)) and a polymer-substituted fullerene shown in E. Samulski, et al., 4 Chemical Materials, 1153 - 1157 (1992).

A drawback of some of the foregoing substituted fullerenes is that they employ expensive reagents, like palladium and xylylene. Further, some are made from reagents which have toxic side effects. Accordingly, there is a need for an inexpensive and non-toxic polymeric substituted fullerene.

### Disclosure Of Invention

One aspect of the invention provides a compound having the moiety Cₙ-A-Cₘ where Cₙ and Cₘ are ball-shaped, n and m are numbers above 59 and below 267, and A is a linker in which Si on the linker is directly attached to both Cₙ and Cₘ. The linker preferably contains the moiety: 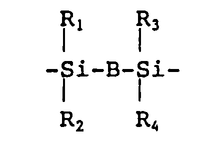 where R₁ through R₄ are selected from the group consisting of hydrogen, halide, aryl, alkyl, silyl, siloxy, and alkoxy, and where B is selected from the group consisting of nothing, oxygen, alkylene and arylene. Preferably, the alkyl and alkoxy groups contain from one to six carbons. The aryl preferably contains a phenyl moiety. This version of the invention is the polymeric version.

The preferred method for making these compounds is to conduct a hydrosilylation reaction between Cₙ, Cₘ, and at least two linker segments, wherein both linker segments have an SiH terminus.

Another version of the invention provides a compound having the moiety: 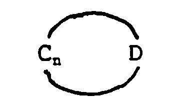 wherein Cₙ is ball-shaped, n is a number above 59 and below 267, D is linked via Si bridges to at least two points on the Cₙ, and D is a divalent moiety of silane, siloxane, polysilane, or polysiloxane. In this aspect of the invention, a fullerene is "shrink-wrapped" by functional silicon moieties to form a somewhat rubbery substance.

The preferred method for making these compounds is to conduct a hydrosilylation reaction between Cₙ and at least two linker segments, wherein both linker segments have an SiH terminus.

The invention therefore provides both polymers of fullerenes and wrapped fullerenes. These compounds have interesting properties for purposes of inter alia photoconducting. In both versions of the invention, Cₙ preferably contains 60 or 70 carbon atoms.

The objects of the invention therefore include:
(a) producing fullerenes of the above kind;
(b) doing so using methods of the above kind;
and (c) creating polymeric fullerenes that are relatively inexpensive and non-toxic.
These and still other objects and advantages of the present invention will be apparent from the description below.

### Brief Description Of The Drawings

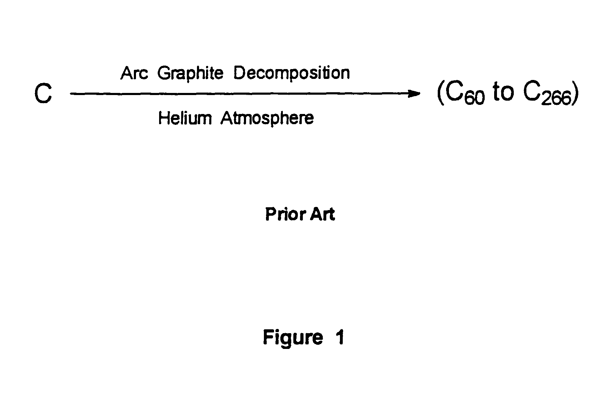

Fig. 1 is a schematic of the Example 1 prior art method of making unsubstituted fullerenes;

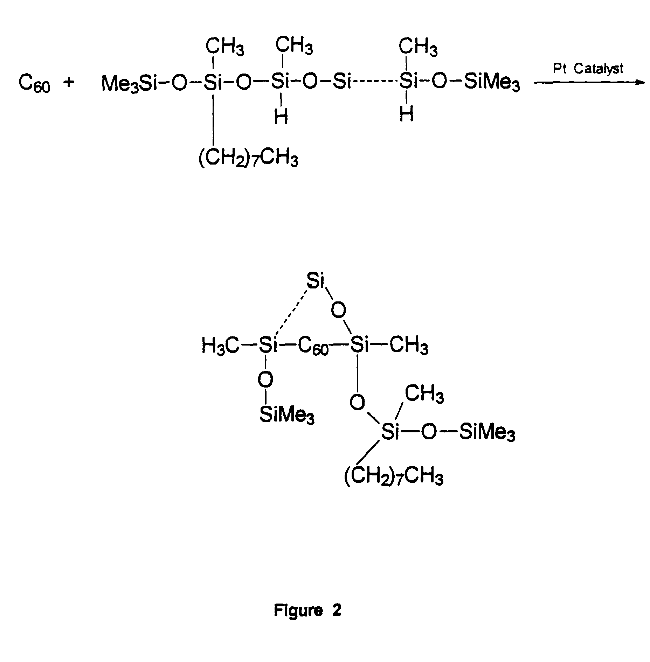

Fig. 2 is a schematic of the Example 2 synthesis;

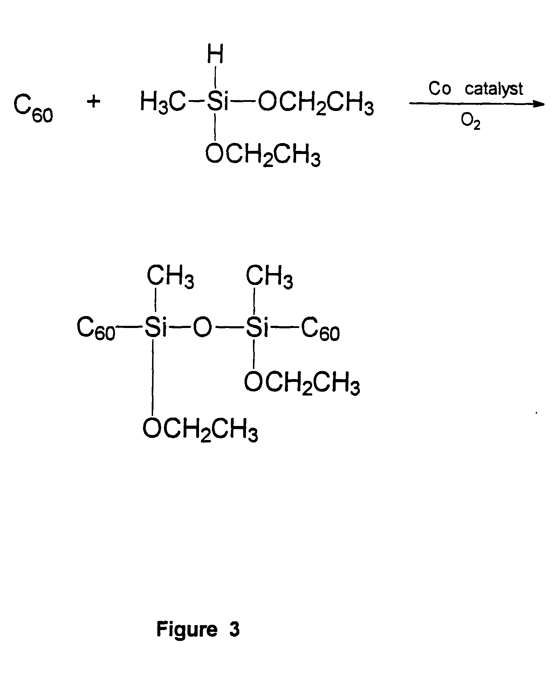

Fig. 3 is a schematic of the Example 3 synthesis;

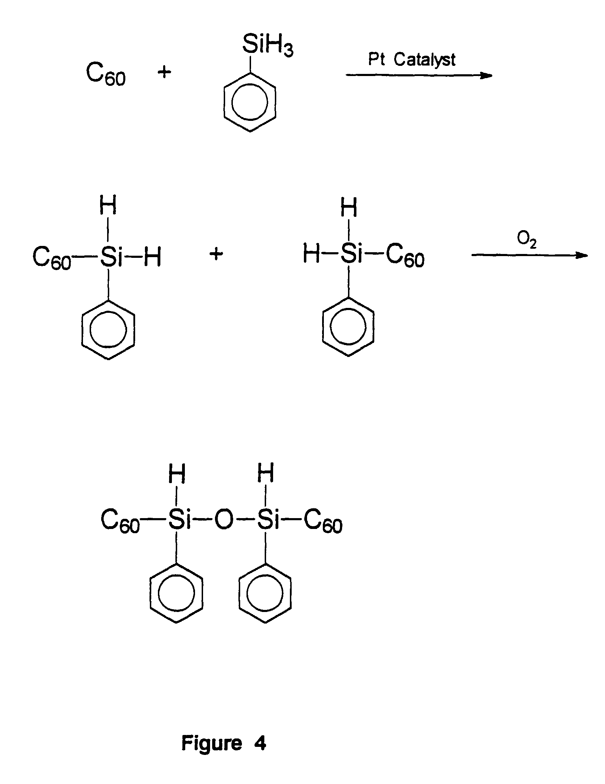

Fig. 4 is a schematic of the Example 4 synthesis;

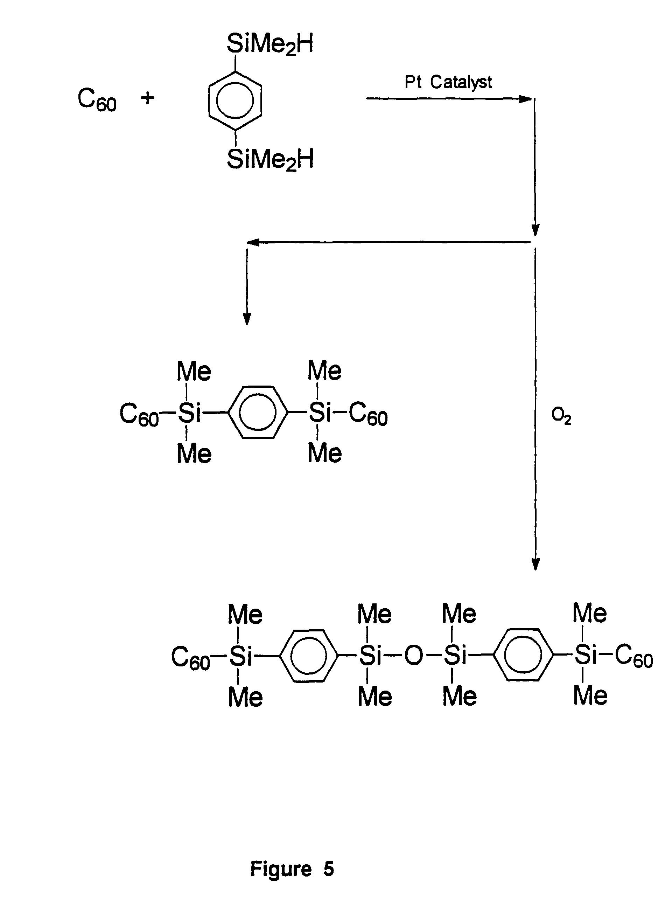

Fig. 5 is a schematic of the Example 5 synthesis;

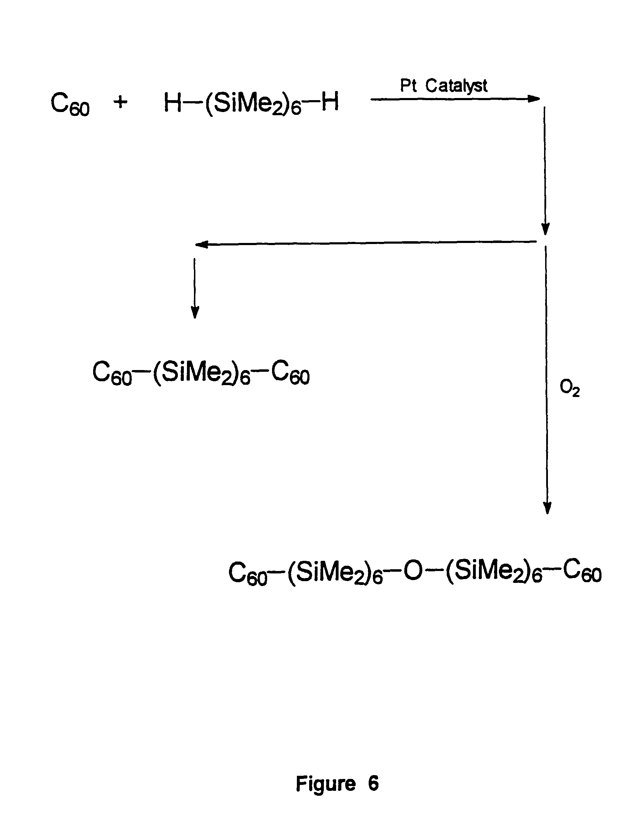

Fig. 6 is a schematic of the Example 6 synthesis; and

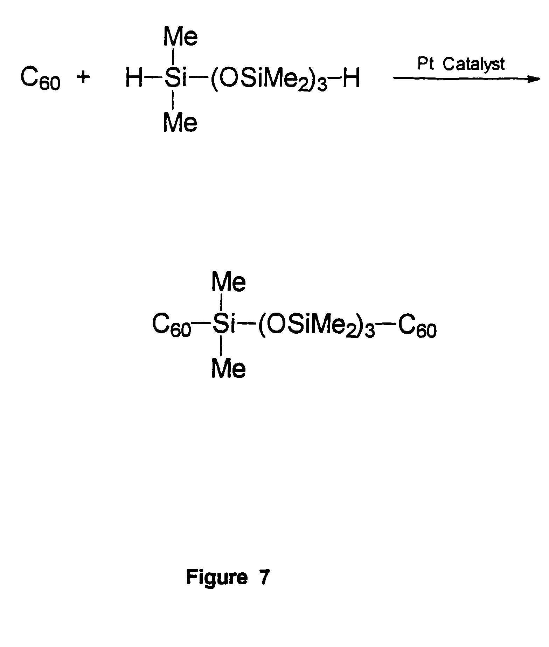

Fig. 7 is a schematic of the Example 7 synthesis.

### Best Modes For Carrying Out The Invention

### Example 1 - Synthesis C₆₀

C₆₀ was synthesized using a benchtop graphite-vaporization apparatus according to Koch, et al., supra, and purified by continuous column chromatography according to P. Bhyrappa, et al., J. Chem. Soc., 936 - 937 (1992). Purity was determined by size-exclusion chromatographic analysis. All glassware was flame-dried and allowed to cool under vacuum. Benzene was washed with concentrated H₂SO₄ until no darkening was observed and was then distilled from CaH₂ under dry argon.

### Example 2 - Platinum Catalyzed Hydrosilylation Of C₆₀ - "Shrink-Wrap"

### Substrates:

(1) Buckminsterfullerene (>99.5% C₆₀)
(2) methylhydro (25 - 30%) methyloctyl (70 - 75%) siloxane copolymer; MW = 5000 - 5500 dal.; DP≈36; Si-H equ./molecule = 8 - 11

A 50 ml Schlenk flask was fitted with a septum and equipped with a teflon-coated magnetic stirring-bar. The flask was then purged with argon and 25 ml of benzene and 0.05 equ. of divinyltetramethlydisiloxane platinum (0) complex (the "catalyst") was added via a syringe. 210 mg (≈9equ.) of the siloxane copolymer was prediluted with 4 ml of benzene and was then introduced into the system. The Pt/siloxane mixture was allowed to stir for 15 mins. During this time it gradually changed from a colorless to dark-yellow solution.

30 mg of C₆₀ was then added under positive pressure and the mixture deoxygenated by argon displacement for ≈15 mins. The septum on the flask was replaced with a teflon stopper and the reaction mixture was stirred for 2 hrs at 24° C. GPC analysis of the reaction mixture indicated full conversion of the fullerene to one product with little MW dispersion. The reaction mixture was then filtered through a short silica gel column to remove the platinum catalyst. The silica gel must be activated by heating at >110° C for at least 2 hours.

The bulk of the benzene was removed from the filtrate with a slow N₂ flow, yielding a shiny, black solid (147 mg, 62% yield). This solid was placed in a vacuum chamber for 24 hrs to remove any remaining solvent. Infrared analysis indicated the absence of Si-H bonds of the starting siloxane in the product. The UV spectra was indicative of a highly substituted fullerene derivative. The adduct's ¹H-NMR resonances were also measured. The compound was soluble in benzene, toluene, carbon disulfide; slightly soluble in tetrahydrofuran; and insoluble in common alcohols.

### Example 3 - Hydrosilylation of C₆₀ by Methylethoxysilanes

The hydrosilylation reaction of C₆₀ was investigated from methylethoxysilanes using cobalt or platinum catalysts. Dimethylethoxysilane (HSiMe₂(OEt)), methyldiethoxysilane (HSiMe(OEt)₂), and triethoxysilane (HSi(OEt)₃) were used as a silane, while any one of dicobalt octacarbonyl (Co₂(CO)₈), chloroplatinic acid (H₂PtCl₆.8H₂O), and platinum-silane complex (PtL₂, L=H₂C=CHSiMeSiMe₂-O-SiMe₂CH=CH₂) were used as a catalyst.

The reaction procedure of this hydrosilylation reaction was same for every combination of silane and catalyst. A representative procedure is described for the combination of methyldiethoxysilane and dicobalt octacarbonyl.

This reaction was carried out under argon atmosphere. C₆₀ (3.6 mg, 0.05 mmol) was dried under the vacuum for 0.5 h and then dissolved in 10 ml of benzene. Into a 50 ml of flask fitted with a conventional condenser, dicobalt octacarbonyl (Co₂(CO)₈, 1.6 mg, 0.005 mmol) and then methyldiethoxysilane (HSiMe(OEt)₂, 0.8 ml, 5 mmol) were placed with stirring for 0.5 h until the color of the solution turned to brown. Then the C₆₀-benzene solution was added to this solution. Stirring was continued at room temperature (about 25° C) for four days with the addition of another portion of dicobalt octacarbonyl (0.6 mg, 0.005 mol) every 24 hs. The total amount of the catalyst was 6.4 mg (0.2 mmol).

Solid material was filtered off and the benzene was evaporated under vacuum, followed by addition of diethyl ether. Unreacted C₆₀ was filtered from this diethyl ether solution, and the product was obtained by the evaporation of diethyl ether. (Yield: 38.2 mg)

### Example 4 - Reaction of C₆₀ With Phenylsilane

In a 100 mL flask was placed 33.3 mg of C₆₀, 1 mL of phenylsilane, 10 mL of benzene and 30.3 mg of chloroplantinic acid. The mixture was kept refluxing for three days under nitrogen. A black-brown solid was obtained after evaporation of the benzene. The product showed featureless UV absorption with tailing up to 500 nm. The product became insoluble solid after passing through aluminum oxide column, due to oxidation.

Similar reactions were carried out using diphenylsilane, hexylsilane, and dimethylchlorosilane. For example, in a 100 mL flask was placed 50 mg of C₆₀, 1 mL of phenyldimethylsilane, 10 mL of benzene and 19 mg of dicobalt octacarbonyl. A procedure similar to the above gave a black-brown solid.

### Example 5 - Reaction of C₆₀ with 1,4-bis(dimethylsilyl)benzene Catalyzed By Platinum bis(1,3-divinyltetramethyldisiloxane) Complex

In a 100 mL flask 77 mg of C₆₀, 1 mL of 1,4-bis(dimethylsilyl)benzene, 50 mL of benzene and 25 µL of platinum bis(1,3-divinyltetramethyldisiloxane) complex at room temperature under an argon atmosphere. The mixture was kept at reflux for 1 day, during when time the characteristic purple color of C₆₀ disappeared. After an additional 25 µL of the complex was added and refluxing was continued for 1 day, this procedure was repeated two more times in order to consume all the C₆₀. After this time no C₆₀ was detected by GPC. Evaporation of benzene gave black-brown solid.

GPC analysis showed that there were two main peaks; one was at 13 mL and the other around 5 - 9.5 mL which composed from complex peaks. UV spectrum of the former fraction resembled to that of original C₆₀ and the latter fraction lost the characteristic feature of C₆₀ spectrum, suggesting that the product at 13 mL had smaller numbers of substituents and the product at 5 - 9.5 mL had multi-substituents.

Fractionation with ether and subsequently with benzene gave two fractions. The ether fraction contained mainly multi-substituted products and the benzene fraction contained C₆₀ and products with smaller number of substituents (determined by GPC).

Similar reactions were carried our using chloroplatinic acid or dicobalt octacabonyl as the catalyst and gave similar results.

### Example 6 - Reaction Of C₆₀ With 1,6-dihydrododecamethylhexasilane Catalyzed By Chloroplatinic Acid

To a 50 mL of flask added 173 mg of C₆₀, 82.1 mg of H(SiMe₂)₆H, 100 mL of benzene, and 120 mg of chloroplatinic acid. The starting silane disappeared after refluxing the mixture for 3 days. Evaporation of the volatile material gave brown solid. Washing with hexane and subsequent elution with benzene from Al₂O₃ column in the presence of O₂ gave wine-red solution. A light brown solid was obtained after evaporation of benzene.

Successful hydrosilylation reactions with the same silane were also carried out using Pt/C and dicobalt octacarbonyl as catalysts.

### Example 7 - The Reaction Of C₆₀ and 1,1,3,3,5,5,7,7-Octamethyltetrasiloxane With Platinum Divinyltetramethyldisiloxane Complex

Platinum divinyltetramethyldisiloxane complex (21 mg, 0.006 mmol) was added to a solution of C₆₀ (43 mg, 0.06 mol) and octamethyltetrasiloxane (179 mg, 0.6 mmol) in 6 ml of benzene at room temperature. The color of the reaction solution changed from purple to dark brown. The reaction mixture was refluxed for 4 h under nitrogen, but only small amounts of products besides C₆₀ was detected by GPC. Additional octamethyltetrasiloxane (179 mg, 0.6 mmol) and platinum divinyltetramethyldisiloxane complex (40 mg, 0.012 mmol) were added, and refluxing was continued. After 1 day, GPC showed an increased amount of products, but a large amount of C₆₀ still remained unreacted. More octamethyltetrasiloxane (720 mg, 2.4 mmol) and platinum divinyltetramethyldisiloxane complex (147 mg, 0.042 mmol) were added in total and the reaction mixture was allowed to reflux for 3 days. Only reaction products were detected by GPC.

After evaporation of the solvent, ether was added. The solution was filtered to remove any insoluble C₆₀ and the solvent evaporated. The remaining black semisolid, 849 mg, was soluble in organic solvent such as THF and chloroform, but became insoluble after some hours at room temperature in the absence of solvent. Yield: 848 mg.

### Other Variants

Although the present invention has been described with reference to certain preferred embodiments, other versions are possible. For example, the "shrink-wrap" version may include a multiplicity of Si linkages and the fullerenes may include up to 266 carbons. Note also that the "moiety" language in the claims is intended to indicate that each Cₙ or Cₘ often also reacts with multiple SiH groups such that the final compound is a cross-linked grid with each fullerene ball linked to many other fullerene balls. Therefore, the scope of the claims should not be limited to the description of the preferred versions contained herein.

### Industrial Applicability

These compounds have potential utility as photoconductors.

## Claims

1. A chemical compound having the following moiety:
Cₙ-A-Cₘ
where Cₙ and Cₘ are ball-shaped, n and m are numbers above 59 and below 267, and A is a linker in which Si on the linker is directly attached to both Cₙ and Cₘ.

2. The compound of claim 1, wherein A contains the following moiety: 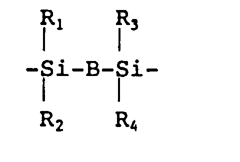 where R₁ through R₄ are selected from the group consisting of hydrogen, halide, aryl, alkyl, and alkoxy, and where B is selected from the group consisting of nothing, oxygen, alkylene and arylene.

3. A compound having the following moiety: 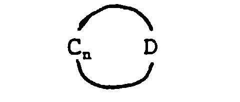 where Cₙ is ball-shaped n is a number above 59 and below 267, D is a divalent moiety of silane, siloxane, polysilane, or polysiloxane, and D is linked via Si bridges to at least two points on the Cₙ.

4. A method for making the compound of claim 1, comprising conducting a hydrosilylation reaction between Cₙ, Cₘ, and at least two linker segments, wherein both linker segments have an SiH terminus.

5. A method for making the compound of claim 3, comprising conducting a hydrosilylation reaction between Cₙ and at least two linker segments, wherein both linker segments have an SiH terminus.

## Patentansprüche

1. Chemische Verbindung mit der folgenden Gruppierung:
Cₙ-A-Cₘ
wobei Cₙ und Cₘ kugelförmig sind, n und m Zahlen über 59 und unter 267 und A ein Verbindungsglied ist, bei dem Si in dem Verbindungsglied direkt an beide, Cₙ und Cₘ, gebunden ist.

2. Verbindung gemäß Anspruch 1, worin A die folgende Gruppierung enthält: 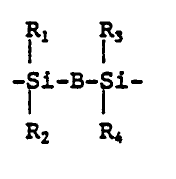 worin R₁ bis R₄ aus der aus Wasserstoff, Halogen, Aryl, Alkyl und Alkoxy bestehenden Gruppe ausgewählt ist und B aus der aus nichts, Sauerstoff, Alkylen und Arylen bestehenden Gruppe.

3. Verbindung mit der folgenden Gruppierung: 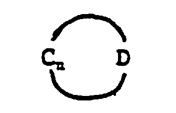 worin Cₙ kugelförmig ist, n eine Zahl über 59 und unter 267, D eine divalente Gruppierung von Silan, Siloxan, Polysilan oder Polysiloxan ist und D über Si-Brücken an wenigstens zwei Punkten auf dem Cₙ mit diesem verbunden ist.

4. Verfahren zur Herstellung der Verbindung gemäß Anspruch 1, umfassend die Durchführung einer Hydrosilylierungsreaktion zwischen Cₙ, Cₘ und wenigstens zwei Verbindungssegmenten, wobei beide Verbindungssegmente einen SiH-Terminus besitzen.

5. Verfahren zur Herstellung der Verbindung gemäß Anspruch 3, umfassend die Durchführung einer Hydrosilylierungsreaktion zwischen Cₙ und wenigstens zwei Verbindungssegmenten, wobei beide Verbindungssegmente einen SiH-Terminus besitzen.

## Revendications

1. Composé chimique renfermant la fraction suivante :
Cₙ-A-Cₘ
dans laquelle Cₙ et Cₘ sont en forme de boule, n et m sont des nombres supérieurs à 59 et inférieurs à 267, et A désigne un chaînon de liaison, du silicium Si appartenant au chaînon de liaison étant lié directement à la fois à Cₙ et à Cₘ.

2. Composé selon la revendication 1, dans lequel A contient le fragment suivant : 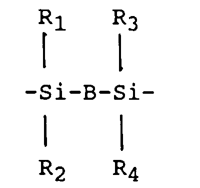 dans lequel R₁ à R₄ sont des radicaux choisis parmi l'atome d'hydrogène, les atomes d'halogène, les groupes aryle, les groupes alkyle et les groupes alcoxy, et B représente un atome d'oxygène, un groupe alkylène ou arylène, ou rien du tout.

3. Composé renfermant la fraction suivante : 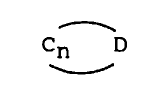 dans laquelle Cₙ est en forme de boule, n est un nombre supérieur à 59 et inférieur à 267, D représente un fragment divalent du type silane, siloxane, polysilane ou polysiloxane, et D est relié par des ponts Si à au moins deux points situés sur Cₙ.

4. Procédé de préparation du composé selon la revendication 1, qui comprend l'étape consistant à effectuer une réaction d'hydrosilylation entre Cₙ, Cₘ et au moins deux segments agents de liaison, les segments agents de liaison ayant tous les deux un groupe terminal SiH.

5. Procédé de préparation du composé selon la revendication 3, qui comprend l'étape consistant à effectuer une réaction d'hydrosilylation entre Cₙ et au moins deux segments agents de liaison, les segments agents de liaison ayant tous les deux un groupe terminal SiH.
